# EUROPEAN PATENT APPLICATION

(11) **EP 4 691 689 A1**
(43) Date of publication of application: **11.02.2026**
(21) Application number: 25192370.2
(22) Date of filing: 29.07.2025
(51) Int. Cl.: B23Q 1/70, B23Q 5/027, B23B 31/20, B23B 31/26, B23Q 11/10

(54) **MACHINE TOOL**

(30) Priority: 08.08.2024 JP 2024131940
(71) Applicant: Sugino Machine Limited, Namerikawa City, Toyama 936-8577 (JP)
(72) Inventor: TAMURA, Ayumu, Namerikawa City, Toyama 936-8577 (JP)
(74) Representative: Global IP Europe Patentanwaltskanzlei

(57) **Abstract**

A machine tool (10), includes: a frame (11); a hollow ram (21) disposed on the frame (11) in a reciprocable manner; a hollow spindle (23) rotatably supported by the ram (21), the spindle (23) including a spindle hole (23g) located at a distal end, and a spline hole (23a) located at a basal end; a guide block (26) disposed in the spindle (23) and having a guide hole (26b) extending along a center axis (3) of the spindle (23); and a spindle drive shaft (15) rotatably supported by the frame (11), the spindle drive shaft (15) including a spline shaft (15a) that engages with the spline hole (23g), and a support shaft (15b) disposed at a distal end of the spline shaft (15a) to be guided in sliding contact with the guide hole (26b, 126b).

## Description

### BACKGROUND

### 1. Technical Field

The present invention relates to a machine tool.

### 2. Description of the Background

For example, a drilling machine disclosed in JP 2022-071706 A is known. The drilling machine includes a frame, a linear guide, a slider, a ram, a spindle, a spindle motor, a feed screw, and a feed motor.

The frame includes a linear guide support plate having a reference surface, a ram support plate having a ram guide hole, and a motor support portion. The linear guide is disposed on the reference surface. The slider reciprocates along the linear guide. The ram is disposed on the slider to penetrate the ram guide hole. The spindle is rotatably supported within the ram. The spindle motor is connected to the spindle. The feed screw includes a nut disposed on the slider, and a screw shaft having one end supported by the motor support portion and the other end being a free end. The feed motor is connected to the screw shaft.

### BRIEF SUMMARY

An object of the present invention is to provide a machine tool capable of replacing a tool with a simple structure.

A first aspect of the present invention provides a machine tool, including:
a frame;
a hollow ram disposed on the frame in a reciprocable manner;
a hollow spindle rotatably supported by the ram, the spindle including
   a spindle hole located at a distal end, and
   a spline hole located at a basal end;
a guide block disposed in the spindle, the guide block having a guide hole extending along a center axis of the spindle; and
a spindle drive shaft rotatably supported by the frame, the spindle drive shaft including
   a spline shaft configured to engage with the spline hole, and
   a support shaft disposed at a distal end of the spline shaft to be guided in sliding contact with the guide hole.

The machine tool may be mounted on a robot arm or a slide table. The machine tool rotates the spindle, feeds the ram, and performs milling, drilling, and tapping operations.

The trigger may be a trigger block extending in a plane perpendicular to the spindle. The trigger block may be disposed between the spindle and the ram.

Preferably, the spindle is supported by the ram at three points: a distal end portion, a central portion, and a basal end portion of the spindle. The support position at the central portion of the spindle may be closer to the distal end than the unclamp ring. The spindle is supported by the ram via a spindle bearing.

The guide block may be integral with the spindle.

The machine tool may include an elastic member that urges the drawbar toward the basal end with respect to the spindle. The elastic member may be disposed between a draw shaft and an elastic member chamber. The elastic member may also be disposed between a draw block and the elastic member chamber.

The spindle drive shaft is coaxially disposed with the spindle. The spindle drive shaft extends along a center axis of the spindle.

According to the present invention, it is possible to provide a machine tool capable of replacing a tool with a simple structure.

### BRIEF DESCRIPTION OF DRAWINGS

FIG. 1 is a longitudinal sectional view of a machine tool according to a first embodiment.
FIG. 2 is a view taken along arrow II in FIG. 1.
FIG. 3 is a sectional view taken along line III-III in FIG. 1.
FIG. 4 is a longitudinal sectional view of a machine tool according to a second embodiment.
FIG. 5 is a sectional view taken along line V-V in FIG. 4.
FIG. 6 is a sectional view taken along line VI-VI in FIG. 4.

### DETAILED DESCRIPTION

### First Embodiment

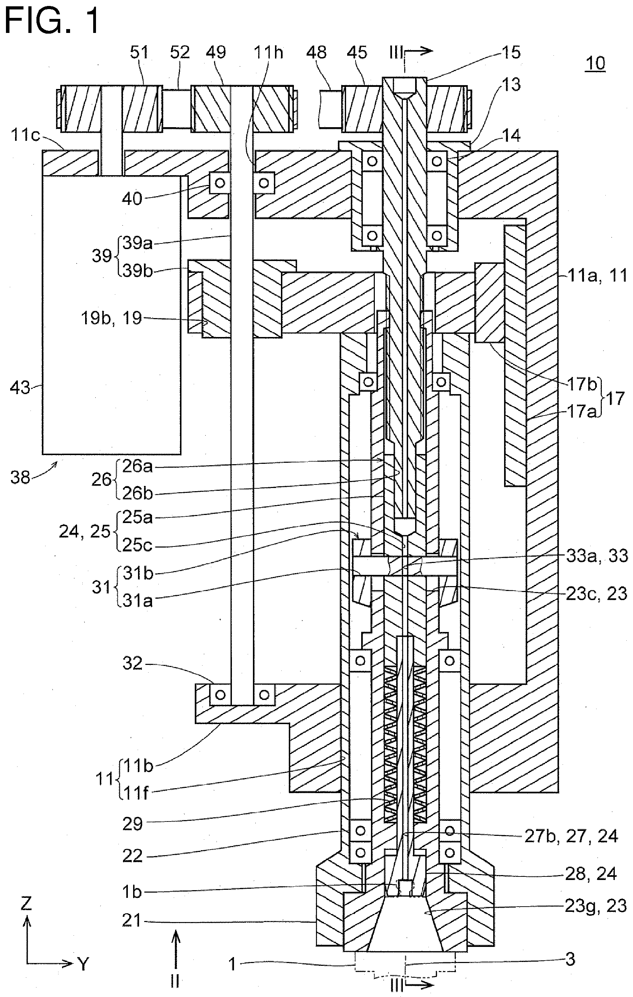

As shown in FIGS. 1 to 3, a machine tool 10 according to the present embodiment includes a frame 11, a linear guide 17, a connection block 19, a housing 13, a bearing 14, a drive shaft (spindle drive shaft) 15, a ram 21, a spindle bearing 22, a spindle 23, a drawbar 24, a guide block 26, an unclamp ring 31, a ring pin 33, a feed unit 38, a spindle motor 41, a driving pulley (second driving pulley) 47, a driven pulley (second driven pulley) 45, and an endless belt (second endless belt) 48.

The feed unit 38 includes a feed screw 39, a bearing 32, a feed motor 43, a driving pulley (first driving pulley) 51, a driven pulley (first driven pulley) 49, and an endless belt (first endless belt) 52.

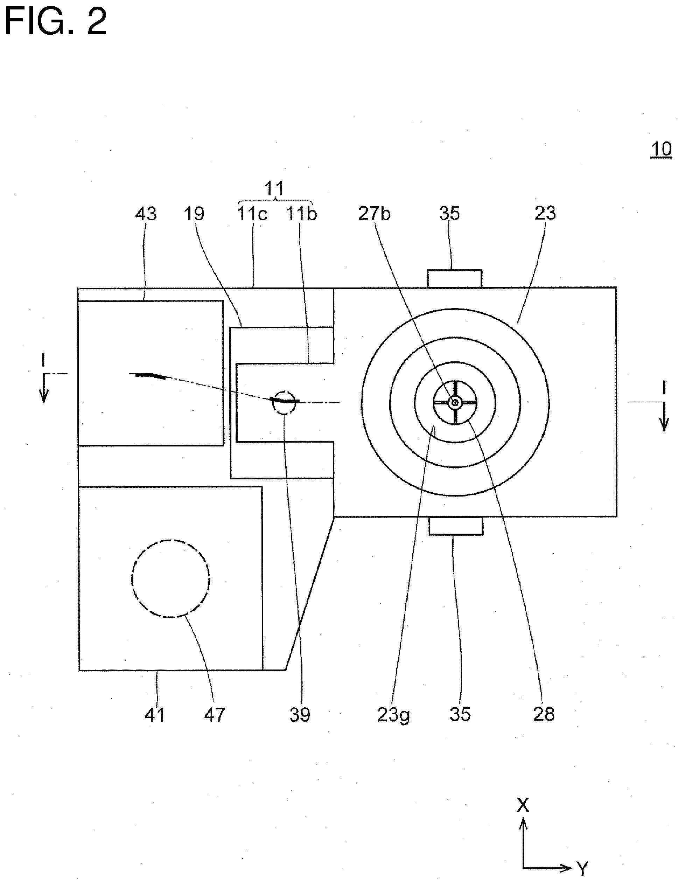

FIG. 1 is a sectional view taken along line I-I in FIG. 2. The line I-I connects a center axis 3 of the spindle 23, a center axis of the feed screw 39, and a center of an output shaft of the feed motor 43.

An upward direction in FIG. 1 is defined as a basal end direction (+Z). A downward direction in FIG. 1 is defined as a distal end direction (-Z). For convenience, a rightward direction in FIG. 1 is defined as a downward direction (+Y). For convenience, a leftward direction in FIG. 1 is defined as an upward direction (-Y). For convenience, a direction perpendicular to the plane of FIG. 1 is defined as a lateral direction (X).

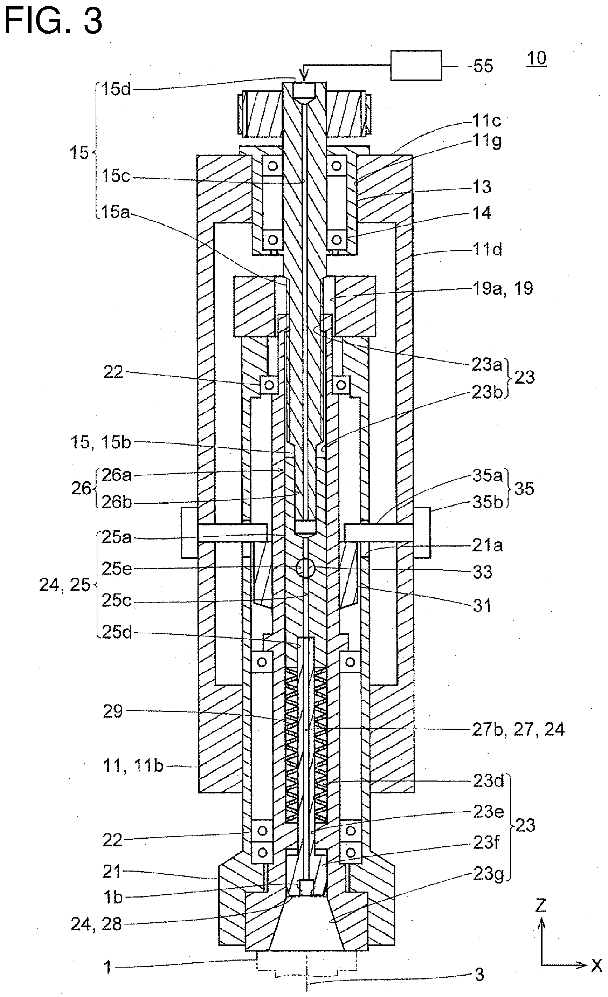

The frame 11 is box-shaped. The frame 11 includes a base plate 11a, a ram support plate 11b, a drive shaft support plate 11c, and a side plate 11d (see FIG. 3). The ram support plate 11b has a ram hole 11f. The drive shaft support plate 11c has a housing hole 11g (see FIG. 3) and a screw support hole 11h. The ram hole 11f and the housing hole 11g extend along the center axis 3.

The linear guide 17 includes a linear rail 17a and a linear block 17b. The linear rail 17a, which extends parallel to the center axis 3, is disposed on the base plate 11a. The linear block 17b reciprocates on the linear rail 17a.

The connection block 19 connects the ram 21, the feed screw 39, and the linear block 17b. The connection block 19 reciprocates integrally with the ram 21 on the linear guide 17. The connection block 19 is rectangular plate-shaped. A lower end portion of the connection block 19 is fastened to the linear block 17b. The connection block 19 includes a drive shaft hole 19a and a nut hole 19b. The drive shaft hole 19a is located at a lower part of the connection block 19. The nut hole 19b is located at an upper part of the connection block 19. The drive shaft hole 19a penetrates the connection block 19 along the center axis 3.

As shown in FIG. 1, the housing 13, which is a hollow cylindrical body, is disposed in the housing hole 11g. Preferably, the housing 13 is insertable into the housing hole 11g from a basal end direction (+Z direction). The housing 13 supports the drive shaft 15 via the bearing 14. The housing 13 may be integral with the drive shaft support plate 11c. The housing 13, the bearing 14, and the drive shaft 15 are integrally removable from the frame 11.

As shown in FIG. 3, the drive shaft 15 includes a spline shaft 15a, a support shaft 15b, a coolant channel (first coolant channel) 15c, and a supply port (coolant supply port) 15d. The drive shaft 15 extends along the center axis 3 to penetrate the drive shaft hole 19a. A basal end of the drive shaft 15 is supported by the housing 13. The basal end of the drive shaft 15 protrudes beyond the housing 13 and the drive shaft support plate 11c toward the basal end. The spline shaft 15a is disposed at a central portion of the drive shaft 15 in an axial direction. The support shaft 15b is disposed at a distal end of the drive shaft 15. The support shaft 15b is a right cylinder. The coolant channel 15c extends along the center axis 3 to penetrate the drive shaft 15. The supply port 15d is disposed at the basal end of the drive shaft 15 to be connected to the coolant channel 15c. The supply port 15d is, for example, a female thread for a pipe.

The ram 21, which is a hollow cylindrical body, extends along the center axis 3. A basal end of the ram 21 is fastened to the connection block 19. A distal end of the ram 21 penetrates the ram hole 11f. The ram 21 slides in an axial direction relative to the ram hole 11f. The ram 21 reciprocates integrally with the connection block 19. As shown in FIG. 3, the ram 21 includes a trigger hole 21a. The trigger hole 21a is arranged on a lateral plane (ZX plane). The lateral plane (ZX plane) is a plane passing through the center axis 3 and extending in the lateral direction. The trigger hole 21a penetrates the ram 21 in a radial direction. The trigger hole 21a is an elongated hole extending in an axial direction.

The spindle 23, which is a hollow cylindrical body, extends along the center axis 3. The spindle 23 is supported by the ram 21 via the spindle bearing 22. As shown in FIG. 3, the spindle 23 includes, in order from the basal end, a spline hole 23a, a drive shaft chamber 23b, a spring chamber (elastic member chamber) 23d, a through hole 23e, a collet chamber 23f, and a spindle hole 23g. The spline hole 23a engages with the spline shaft 15a. The drive shaft chamber 23b is connected to the spline hole 23a and the spring chamber 23d. The spindle hole 23g is connected to the collet chamber 23f. The through hole 23e connects the collet chamber 23f and the spring chamber 23d.

A tool 1 is attached to the spindle hole 23g. The tool 1 includes a stud bolt 1b.

The guide block 26 is a hollow right cylinder. The guide block 26 includes an outer surface 26a and a guide hole 26b. The outer surface 26a, which contacts an inner surface of the drive shaft chamber 23b, slides in an axial direction. The guide hole 26b contacts an outer surface of the support shaft 15b. The guide hole 26b slides with the support shaft 15b in an axial direction. The support shaft 15b is supported by the spindle 23 via the guide block 26. The guide hole 26b forms part of a second coolant channel.

The drawbar 24 is disposed at a distal end of the spindle 23. The drawbar 24 reciprocates inside the spindle 23. The drawbar 24 includes a draw block 25, a draw shaft 27, and a collet 28.

As shown in FIG. 3, the draw block 25 is a hollow cylindrical body. The draw block 25 includes a body 25a, a shaft support hole 25d, a coolant channel (second coolant channel) 25c, and a pin fixing hole 25e.

The body 25a is connected to the guide block 26. The shaft support hole 25d and the coolant channel 25c extend along the center axis 3. The shaft support hole 25d, which is disposed at a distal end of the body 25a, opens at the distal end of the body 25a. The coolant channel 25c connects the guide hole 26b and the shaft support hole 25d. The pin fixing hole 25e extends in a radial direction to penetrate the body 25a. The pin fixing hole 25e is a cylindrical hole.

The draw shaft 27 is a hollow cylindrical body. The draw shaft 27, which penetrates the through hole 23e, is fastened to the shaft support hole 25d. The draw shaft 27 includes a coolant channel (second coolant channel) 27b.

The collet 28 grips the stud bolt 1b of the tool 1. The collet 28 is disposed at a distal end of the draw shaft 27. The collet 28 is disposed in the collet chamber 23f.

A disc spring 29 is disposed in the spring chamber 23d. The disc spring 29 urges the drawbar 24 toward the basal end.

The unclamp ring 31, which is a hollow cylindrical body, is disposed at a central portion of the spindle 23. The unclamp ring 31 may slide on an outer circumferential surface of the spindle 23. As shown in FIG. 1, the unclamp ring 31 includes a pin hole 31a and a contact surface 31b. The pin hole 31a extends in a radial direction to penetrate the unclamp ring 31. The contact surface 31b is disposed at a rear end of the unclamp ring 31.

A ring pin 33 penetrates the pin hole 31a, the ring pin hole 23c, and the pin fixing hole 25e. The ring pin 33 connects the drawbar 24 and the unclamp ring 31. The ring pin 33 includes a coolant channel (second coolant channel) 33a (see FIG. 1). The ring pin 33 reciprocates integrally with the drawbar 24 and the unclamp ring 31 within the ring pin hole 23c.

As shown in FIG. 3, a pair of unclamp pins (triggers) 35 extend from left and right (X direction) toward the center axis 3. Each unclamp pin 35 includes a head 35b and a pin 35a. The head 35b is fixed to the side plate 11d. The pin 35a penetrates the trigger hole 21a to protrude into the inside of the ram 21. When the ram 21 is retracted, the pin 35a can contact the contact surface 31b.

As shown in FIG. 1, a feed motor 43 is disposed on the drive shaft support plate 11c. The driving pulley 51 is connected to the feed motor 43. The feed screw 39 includes a screw shaft 39a and a nut 39b. The screw shaft 39a is supported by the ram support plate 11b via the bearing 32. The screw shaft 39a is supported by the drive shaft support plate 11c via a bearing 40. The nut 39b is inserted into the nut hole 19b to be fastened to the connection block 19. A basal end of the screw shaft 39a protrudes rearward beyond the drive shaft support plate 11c. The driven pulley 49 is fastened to the basal end of the screw shaft 39a. The endless belt 52 is stretched between the driving pulley 51 and the driven pulley 49.

As shown in FIG. 2, a spindle motor 41 is installed on the drive shaft support plate 11c. The driving pulley 47 is connected to the spindle motor 41. The driven pulley 45 is disposed at a basal end of the drive shaft 15. The endless belt 48 is stretched between the driving pulley 47 and the driven pulley 45.

As shown in FIG. 3, a coolant device 55 is connected to the supply port 15d. The coolant device 55 supplies coolant to the machine tool 10. The coolant may be, for example, a liquid coolant, mist coolant, or gas coolant.

A tool 1 is attached to the spindle hole 23g by a tool changer (not shown), a robot (not shown), or an operator.

When the ram 21 is fed forward by the feed unit 38, the drawbar 24 is pulled toward the basal end by the disc spring 29. The collet 28 thus grips the stud bolt 1b and brings the tool 1 into tight contact with the spindle hole 23g.

When the feed unit 38 further feeds the ram 21 forward, the tool 1 attached to the spindle 23 performs machining on a workpiece. The tool 1 performs, for example, milling, drilling, or tapping.

When the ram 21 is fed toward the basal end by the feed unit 38, the contact surface 31b contacts the unclamp pin 35. When the feed unit 38 continues to feed the ram 21 toward the basal end, the unclamp ring 31 is pressed by the unclamp pin 35. The drawbar 24 thus advances relative to the spindle 23 against the elastic force of the disc spring 29. As a result, the collet 28 releases the stud bolt 1b and pushes out the tool 1 from the spindle hole 23g.

According to the machine tool 10 of the present embodiment, the drawbar 24 advances relative to the spindle 23 and unclamps the tool 1 merely by feeding the ram 21 toward the basal end with the feed unit 38. Further, the drawbar 24 clamps the tool 1 merely by feeding the ram 21 toward the distal end with the feed unit 38. The machine tool 10 thus replaces the tool 1 with a simple structure. The machine tool 10 performs drilling, tapping, milling, and other operations by further feeding the ram 21.

The unclamp pin 35 is directly disposed on the frame 11. The force with which the disc spring 29 pulls the drawbar 24 is thus increased.

The drive shaft 15 is supported at both ends by the bearing 14 and the spindle 23. This suppresses runout of the circumference of the drive shaft 15. This increases the rotational speed of the spindle 23.

As shown in FIG. 3, the coolant supplied from the supply port 15d passes through the coolant channels 15c, 25c, 33a, and 27b, and is supplied to the tool 1 via the collet 28. The machine tool 10 thus supplies coolant to a machining point through the tool holder, from a distal end of a cutter of the tool 1 or from between the cutter and the tool holder.

The support shaft 15b is supported by the guide block 26. The guide block 26 is integral with the drawbar 24. The coolant channel 15c is directly connected to the coolant channels 25c, 27b of the drawbar 24. The coolant channel 15c has thus fewer connection portions and smaller cross-sectional changes. This suppresses pressure loss of the coolant. Furthermore, when the coolant is mist coolant, separation of the mist is suppressed.

### Second Embodiment

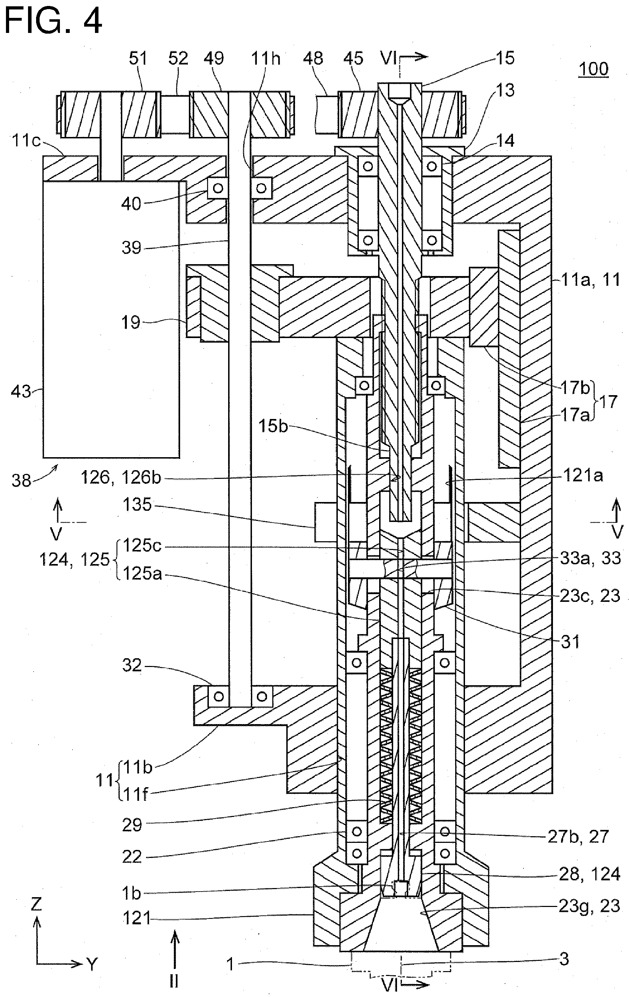

As shown in FIGS. 4 to 6, a machine tool 100 according to the present embodiment includes a ram 121, a guide block 126, a drawbar 124, and a trigger block (trigger) 135. Other configurations of the machine tool 100 are substantially identical to those of the machine tool 10 of the first embodiment.

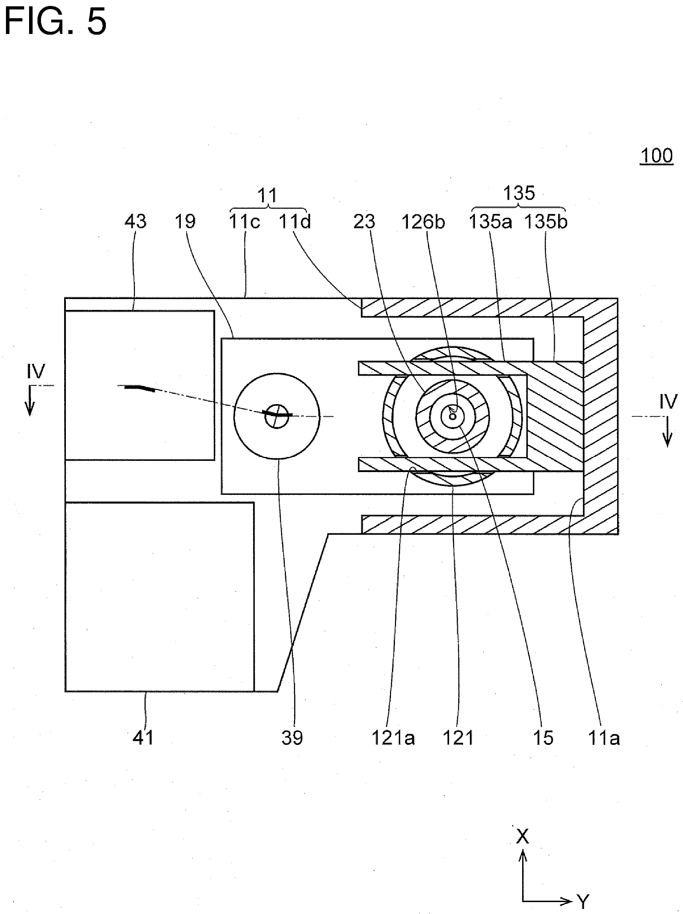

FIG. 4 is a sectional view taken along line IV-IV in FIG. 5.

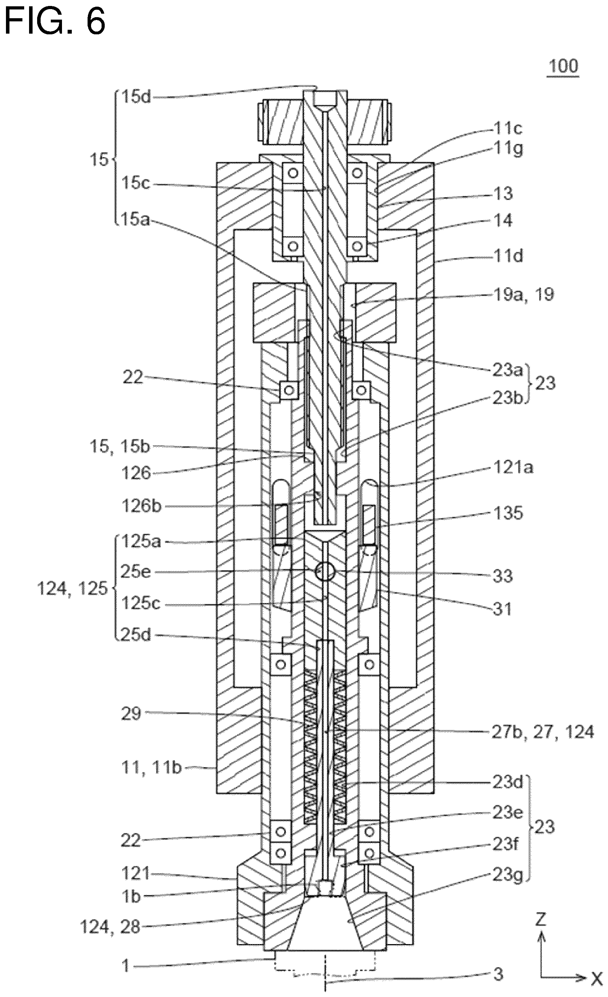

The ram 121 includes a trigger hole 121a. As shown in FIG. 5, the ram 121 includes a pair of trigger holes 121a in a left-right direction (X direction) with respect to the center axis 3. The trigger holes 121a penetrate the ram 121 in a vertical direction (Y direction). As shown in FIG. 6, the trigger holes 121a extend in a front-rear direction (Z direction). Other configurations of the ram 121 are substantially identical to those of the ram 21 of the first embodiment.

As shown in FIG. 4, the guide block 126, which is a hollow cylinder, is integral with the spindle 23. The guide block 126 includes a guide hole 126b. The guide hole 126b extends along the center axis 3. The guide hole 126b supports the support shaft 15b. The support shaft 15b slides axially relative to the guide hole 126b.

The drawbar 124 includes a draw block 125, a draw shaft 27, and a collet 28. The drawbar 124 reciprocates independently of the guide block 126 inside the spindle 23. The draw block 125 includes a body 125a, a coolant channel 125c, a shaft support hole 25d, and a pin fixing hole 25e. The body 125a is separate from the guide block 126. The coolant channel 125c is substantially identical to the coolant channel 25c of the first embodiment.

As shown in FIG. 5, the trigger block 135 has a U-shape in a front view. The trigger block 135 is disposed on the base plate 11a. The trigger block 135 includes a pair of triggers 135a and a connecting block 135b. As shown in FIG. 5, the triggers 135a are rectangular plate-shaped. As shown in FIG. 5, the triggers 135a extend in the vertical direction (Y direction) and penetrate the trigger holes 121a, respectively. The connecting block 135b, which connects the pair of triggers 135a, is fastened to the base plate 11a.

According to the machine tool 100 of the present embodiment, a moment of inertia of area of the triggers 135a in the front-rear direction (Z direction) increases. The elastic force of the disc spring 29 is thus increased compared to the machine tool 10 of the first embodiment.

The present invention is not limited to the above-described embodiments, and various modifications can be made without departing from the gist of the present invention. All technical matters included in the technical concept described in the claims are included in the scope of the present invention. The above-described embodiments are merely exemplary, and those skilled in the art can make various alternatives, modifications, variations, or improvements based on the disclosures of the present specification, and these are included in the technical scope described in the appended claims.

### Reference Signs List

- 10, 100: Machine tool

- 11: Frame
- 15: Drive shaft (spindle drive shaft)
- 15a: Spline shaft
- 15b: Support shaft
- 21: Ram
- 23: Spindle
- 23g: Spindle hole
- 23a: Spline hole
- 26, 126: Guide block
- 26a, 126a: Guide hole

## Claims

1. A machine tool (10, 100), comprising:
a frame (11);
a hollow ram (21) disposed on the frame (11) in a reciprocable manner;
a hollow spindle (23) rotatably supported by the ram (21), the spindle (23) including
a spindle hole (23g) located at a distal end, and
a spline hole (23a) located at a basal end;
a guide block (26, 126) disposed in the spindle (23), the guide block (26, 126) having a guide hole (26b, 126b) extending along a center axis (3) of the spindle (23); and
a spindle drive shaft (15) rotatably supported by the frame (11), the spindle drive shaft (15) including
a spline shaft (15a) configured to engage with the spline hole (23g), and
a support shaft (15b) disposed at a distal end of the spline shaft (15a) to be guided in sliding contact with the guide hole (26b, 126b).

2. The machine tool (10, 100) according to claim 1, wherein
the support shaft (15b) has a smaller diameter than the spline shaft (15a).

3. The machine tool (10, 100) according to claim 1 or 2, wherein
the guide hole (26b, 126b) has a smaller diameter than the spline shaft (15a).

4. The machine tool (10) according to any one of claims 1 to 3, wherein
the guide block (26) has an outer peripheral surface (26a) in contact with an inner side of the spindle (23).

5. The machine tool (10) according to any one of claims 1 to 4, further comprising:
a drawbar (24) disposed in the spindle (23) in a reciprocable manner, the drawbar (24) including
a collet (28),
a draw shaft (27) connected to the collet (28), and
a draw block (25) connected to the basal end side of the draw shaft (27);
wherein
the guide block (26) is connected to the draw block (25).

6. The machine tool (10) according to any one of claims 1 to 5, wherein
the spindle drive shaft (15) includes a first coolant channel (15c) extending along the center axis (3) to penetrate the spindle drive shaft (15), and
the drawbar (24) includes a second coolant channel (25c, 27b, 33a) extending along the center axis (3) to penetrate the drawbar (24), the second coolant channel (25c, 27b, 33a) connecting the first coolant channel (15c) and the spindle hole (23g).

7. The machine tool (10) according to any one of claims 1 to 6, wherein
the frame (11) includes
a ram support plate (11b) slidably supporting a distal end of the ram (21) in a front-rear direction, and
a drive shaft support plate (11c) rotatably supporting the spindle drive shaft (15).

8. The machine tool (10) according to any one of claims 1 to 7, further comprising:
a linear guide (17) extending along the spindle (23) and disposed on the frame (11);
a connection block (19) guided by the linear guide (17) to be connected to a basal end of the ram (21), the connection block (19) having a drive shaft hole (19a) through which the spindle drive shaft (15) penetrates; and
a ram drive unit (38) disposed on the frame (11), the ram drive unit (38) configured to reciprocate the connection block (19).
